# FASCICULE DE BREVET EUROPEEN

(11) **EP 1 563 472 B1**
(45) Date de publication et mention de la délivrance du brevet: **14.08.2019**
(21) Numéro de dépôt: 03798195.8
(22) Date de dépôt: 19.09.2003
(51) Int. Cl.: G08C 19/28, H04B 1/20

(54) **PROCÉDÉ DE COMMANDE DE PLUSIEURS APPAREILS À L'AIDE D'UN DISPOSITIF DEPORTÉ, ET DISPOSITIF DEPORTÉ METTANT EN OEUVRE LE PROCÉDÉ**
VERFAHREN ZUR STEUERUNG MEHRERER VORRICHTUNGEN MIT HILFE EINER VERBINDUNGSANGESCHLOSSENEN EINRICHTUNG UND VERBINDUNGSANGESCHLOSSENE EINRICHTUNG ZUR AUSFÜHRUNG DES VERFAHRENS
METHOD FOR CONTROLLING SEVERAL APPARATUSES WITH THE AID OF A LINK ATTACHED DEVICE AND SAID LINK ATTACHED DEVICE FOR CARRYING OUT SAID METHOD

(30) Priorité: 27.09.2002 FR 0211954
(43) Date de publication de la demande: 17.08.2005
(73) Titulaire: InterDigital Madison Patent Holdings, 75017 Paris (FR)
(72) Inventeur: TRINCHERO, Olivier, F-92210 Saint Cloud (FR); MINGOT, Jacques, F-78590 Noisy Le Roi (FR); CHEVALLIER, Pascal, F-78170 La Celle Saint Cloud (FR)
(74) Mandataire: Huchet, Anne
(86) Numéro de dépôt international: PCT/EP2003/050642
(87) Numéro de publication internationale: WO 2004/029897

(56) Documents cités:
- US-A- 4 566 034
- US-A- 4 825 200
- US-A- 5 410 326
- US-A- 5 854 594
- US-A- 6 127 961

## Description

L'invention concerne un procédé de commande de plusieurs appareils électroniques à partir d'un dispositif portable tel qu'une télécommande, et le dispositif portable pour la mise en oeuvre du procédé.

De nombreux appareils électroniques peuvent recevoir des signaux émis par une télécommande ce qui permet à un utilisateur de contrôler à distance ces appareils. Généralement, ces appareils sont utilisés dans le domaine du multimédia, par exemple : un récepteur de télévision, un magnétoscope, un lecteur DVD, un décodeur, un amplificateur, un lecteur de CD audio, ... Les télécommandes peuvent aussi contrôler des appareils informatiques (par exemple des PC, des imprimantes, des scanners, ...) ou domotiques (n'importe quels appareils domestiques reliés ou non à un réseau domestique). La télécommande est dotée de touches dédiées et de touches banalisées (par exemple, celles du pavé numérique). Les touches dédiées permettent à l'utilisateur d'envoyer une commande à l'appareil, cette commande peut être directement liée à une fonction précise de l'appareil comme le contrôle du volume sonore, le contraste de l'image, l'allumage ou l'extinction, etc. La commande peut aussi être utilisée par l'interface utilisateur comme un élément de navigation tel que : déplacement du curseur, appel à un menu, sélection d'un élément mis en évidence sur un organe d'affichage. Les télécommandes peuvent également être dotées d'une surface sensitive où les touches apparaissent par des formes affichées sur une surface graphique, un écran LCD affichant des icônes par exemple. Les télécommandes émettent un paquet de signaux contenant un code d'identification de l'appareil à contrôler et le code de la touche activée correspondant à une commande. Le signal émis est optique (infrarouge par exemple), radioélectrique, électrique (à l'aide d'un fil), sonore (ultrason) ou tout autre support de transmission d'une donnée numérique.

La généralisation des télécommandes pour de nombreux appareils entraîne la multiplicité de celles-ci. Supposons une installation multimédia comprenant un récepteur de télévision, un décodeur, un magnétoscope un lecteur DVD et un amplificateur, l'utilisateur dispose de cinq télécommandes formant un ensemble encombrant, l'utilisateur se trompant souvent dans le choix de l'une d'entre elles. Pour résoudre ces problèmes, l'utilisateur peut s'équiper d'une télécommande universelle capable de contrôler plusieurs appareils. Le choix de l'appareil à contrôler s'effectue par exemple à l'aide d'un commutateur à plusieurs positions ou par des boutons poussoir associés à chaque appareil, le dernier bouton poussoir activé sélectionnant l'appareil à commander. De ce fait, les télécommandes universelles sont plus fastidieuses à utiliser que des télécommandes dédiées à un seul appareil car, avant d'émettre une commande, il faut systématiquement spécifier quel appareil l'utilisateur veut contrôler. Il faut donc, avant l'activation d'une touche d'une telle télécommande, associer cette touche à l'appareil souhaité.

Le document US 5 410 326 - GOLDSTEIN décrit une télécommande permettant de contrôler successivement plusieurs appareils par un changement de mode. Elle est dotée d'un écran tactile affichant des icônes que l'utilisateur peut sélectionner pour exécuter des commandes. Elle dispose aussi de moyens de connexion pour télécharger une application adaptée à la commande d'un appareil en particulier. A l'aide d'un menu, l'utilisateur sélectionne l'application correspondant à l'appareil qu'il désire commander, puis lance des commandes à cet appareil. De ce fait la télécommande décrite dans ce document ne possède pas un mode spécial où l'utilisateur peut contrôler plusieurs appareils, sans avoir besoin pour chaque commande de sélectionner préalablement chaque appareil.

Le document US 6 127 961 - STACY décrit une télécommande programmable permettant de contrôler plusieurs appareils de fonction et de marque différente. Elle dispose de cinq diodes LED indiquant quel est l'appareil concerné par l'action en cours et d'un moyen d'introduction d'un code pour sélectionner l'appareil selon la marque et la fonction. Un bouton permet de sélectionner un appareil déterminé en allumant une des diodes LED, la télécommande ne peut donc pas non plus contrôler plusieurs appareils dans un mode spécial, sans avoir besoin pour chaque commande de sélectionner préalablement chaque appareil.

Le document US 4 825 200 - EVANS décrit une télécommande programmable avec un premier mode fe fonctionnement permettant de contrôler un appareil parmi une pluralité d'appareils et un deuxième mode permettant de contrôler plusiers appareils à la fois. Ce document ne divulgue pas que le moyen de sélection d'un appareil parmi la pluralité d'appareils permet également d'activer le second mode.

Récemment, une filiale de la demanderesse fabriquant des télécommandes, a réalisé des associations appareils/fonctions limitées à certains cas bien précis. Par exemple, lorsque l'installation multimédia comporte un récepteur de télévision et un amplificateur audio, le contrôle de volume du son peut être réalisé au niveau de l'amplificateur ou au niveau du récepteur de télévision. Les télécommandes fabriquées par la filiale de la demanderesse appelées « Plasma » sont identiques pour ces deux différents appareils, elles disposent d'un sélecteur pour affecter la télécommande à un type d'appareil déterminé. Selon la position du sélecteur, les signaux émis sont destinés à l'appareil sélectionné par le sélecteur. Mais, cette télécommande est capable d'envoyer des signaux de commande du son à l'aide des touches « SON + » et « SON-» à des appareils différents. Pour cela, conformément à la notice d'utilisation de cette télécommande, l'utilisateur doit maintenir la touche « MENU » et en même temps appuyer sur les touches « 9 », « 9 », « 9 » pour affecter la commande du son récepteur de télévision ou appuyer sur les touches « 9 », « 9 », « 0 », pour affecter la commande du son à l'amplificateur. L'affectation est enregistrée dans une mémoire non volatile, il n'y a pas besoin de recommencer l'opération à chaque fois. Par exemple, lorsque le sélecteur est positionné sur VCR, les touches « SON + » et « SON-» contrôlent soit le récepteur de télévision, soit l'amplificateur et les touches de 1 à 9 ainsi que les touches Programme + et Programme - contrôlent le changement de chaînes sur le magnétoscope.

Un autre exemple concerne les télécommandes « Plasma » utilisées pour commander des lecteurs de DVD, des magnétoscopes ou des téléviseurs, qui sont aussi fabriquées par la filiale de la demanderesse. Ces télécommandes possèdent les touches « PLAY », « STOP », « REV », « FWD », et « PAUSE » destinées à contrôler la lecture d'un support tel qu'une cassette magnétique vidéo ou un disque DVD. Lorsque le sélecteur est en position « TV », l'appareil destinataire des signaux émis lors de l'activation de l'une des touches dépend de la précédente position du sélecteur. Si l'utilisateur a précédemment basculé le sélecteur de la position « VCR » à « TV », l'activation d'une de ces touches contrôle le magnétoscope. Si le sélecteur était dans la position « DVD » avant « TV », l'activation d'une de ces touches contrôle le lecteur de disque DVD.

Ces précédents exemples montrent qu'il est connu d'associer ponctuellement des touches à certains appareils. Mais cette association nécessite une séquence opératoire complexe que l'utilisateur ne se rappelle pas toujours. De plus, les associations sont limitées à des cas bien précis définis par le constructeur à l'origine, ce qui limite les possibilités offertes à l'utilisateur.

L'invention propose une nouvelle méthode de programmation des fonctions d'une télécommande et une nouvelle télécommande résolvant les problèmes de l'art antérieur, offrant des possibilités de commandes accrues et une manière simple et souple de contrôler en même temps plusieurs appareils.

La présente invention est définie par l'objet des revendications indépendantes.

D'autres caractéristiques et avantages de l'invention apparaîtront maintenant avec plus de détails dans le cadre de la description qui suit d'exemples de réalisation donnés à titre illustratif en se référant aux figures annexées qui représentent :
- la figure 1 présente un schéma d'une architecture interne des principaux éléments d'une télécommande selon un exemple de réalisation de l'invention,
- la figure 2 illustre un schéma d'une télécommande selon un exemple de réalisation de l'invention,
- la figure 3 est un organigramme représentant les principales étapes pour la mise en oeuvre d'un exemple de réalisation de l'invention illustré par la figure 1,
- la figure 4 est un organigramme représentant les principales étapes pour la mise en oeuvre d'un perfectionnement du présent exemple de réalisation de l'invention illustré par la figure 1.

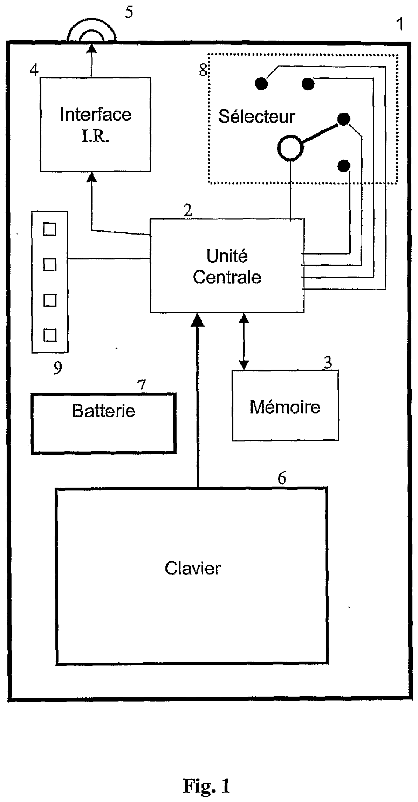

La figure 1 représente les principaux éléments constituant un module de commande d'appareil selon un exemple de réalisation de l'invention, typiquement une télécommande. La télécommande 1 est dotée : d'une unité centrale 2 réalisée par exemple sous la forme d'un microprocesseur, contrôlant les autres éléments : une mémoire 3 contenant le programme exécutable et des données, avantageusement, la mémoire 3 peut être intégrée dans le microprocesseur 1, une interface de communication 4 pour la mise en forme (modulation, amplification, ...) des signaux émis par la télécommande à destination des différents appareils. L'interface est connectée à un émetteur de signaux infrarouge 5. Avantageusement, l'interface 4 peut aussi être intégré dans le microprocesseur. L'intégration de la mémoire 3 et de l'interface 4 est possible en utilisant un microcontrôleur comme unité centrale 1.

La télécommande est dotée d'un clavier 6 que comprend un ensemble de touches reliées électriquement en colonnes et en lignes (non représentées) à l'unité centrale 2, le programme exécutable de la mémoire 3 comprend un module de décodage des lignes et colonnes permettant de déterminer le code de la touche enfoncée sur le clavier 6. Selon le présent exemple de réalisation, le clavier 6 comporte notamment la touche « CONFIGURATION » et d'autres touches telles que : « SON+ », « SON -», « PLAY », « MUTE », etc.... La télécommande est alimentée par une batterie 7 fournissant l'énergie de fonctionnement ; une alimentation de type sans contact par des cellules photo-voltaïque par exemple est aussi possible. La télécommande dispose d'un sélecteur 8 comportant plusieurs positions, ce sélecteur permet à l'utilisateur de choisir entre plusieurs appareils tels que un récepteur de télévision, un magnétoscope, un amplificateur, ... Une position de ce sélecteur active le mode « MULTI » qui permet de commander plusieurs appareils à la fois. Une variante consiste à remplacer le sélecteur 8 par un ensemble de touches du clavier 6, le nombre de touches de l'ensemble étant égal à celui des positions du sélecteur 8. Une seconde variante consiste à combiner les deux : un sélecteur pour sélectionner l'appareil et une touche pour activer le mode « MULTI ». La touche étant plus prioritaire que le sélecteur, pour sortir du mode « MULTI », il faut soit appuyer une seconde fois sur la touche ou, changer la position du sélecteur 8. De façon facultative et selon un perfectionnement qui sera détaillé plus loin, la télécommande 1 est dotée d'indicateurs visuels 9, typiquement des diodes LED de couleurs différentes dont les rôles seront détaillés plus loin.

Une variante au sélecteur 8 comportant plusieurs positions consiste à utiliser un bouton poussoir et plusieurs voyant lumineux de type LED. Chaque voyant représentant un appareil, l'appuie sur le bouton déclenche l'extinction de la LED allumé et l'allumage de la suivante, et ainsi de suite en formant un chenillard. Par l'indication du voyant allumé, l'utilisateur connaît l'appareil sélectionné.

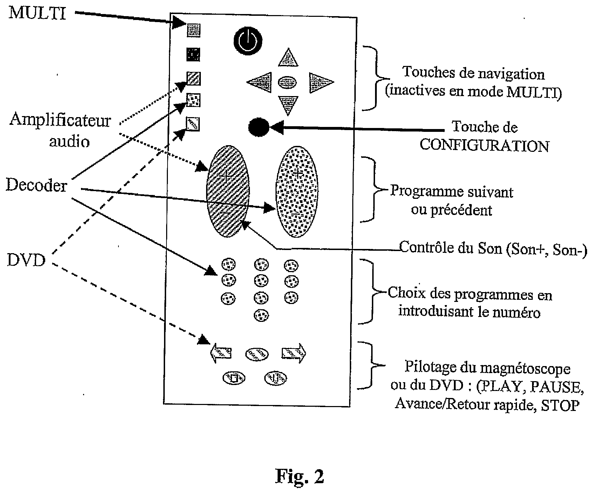

La figure 2 montre un schéma d'organisation des touches telles que l'utilisateur en dispose sur la face supérieure de la télécommande. Avantageusement, la forme des touches dépend de leurs fonctions, ainsi les touches « SON+ » et « SON- » sont regroupées en une bascule à trois positions dont la position médiane est celle de repos. Les 4 touches de direction forment des flèches orientées dans quatre directions. Le bouton d'Arrêt/Marche d'un appareil se distingue facilement. Le sélecteur 8 pour le choix des différents appareils et l'activation du mode « MULTI » est représenté par un ensemble de touches sur la figure 2. La touche « CONFIGURATION » située à proximité du sélecteur 8 est clairement identifiée. Selon un exemple de réalisation, lorsque le sélecteur est positionné en mode « MULTI », la figure 2 montre des exemples d'associations entre des commandes activées par des touches et des appareils spécifiques : les boutons de contrôle du « SON + » et « SON- » sont associés à l'amplificateur audio, les boutons « programme + » et programme- » et le pavé numérique sont associés au décodeur, et les boutons « PLAY », « PAUSE », « AVANCE RAPIDE », « RETOUR RAPIDE », « STOP » sont associés au lecteur de DVD. Dans l'exemple de la figure 2, les boutons de navigation ne sont associés à aucun appareil et sont donc sans effet en position MULTI.

Après avoir montré les différents éléments permettant la réalisation d'un exemple d'un module de commande, nous allons maintenant détailler comment ces éléments coopèrent.

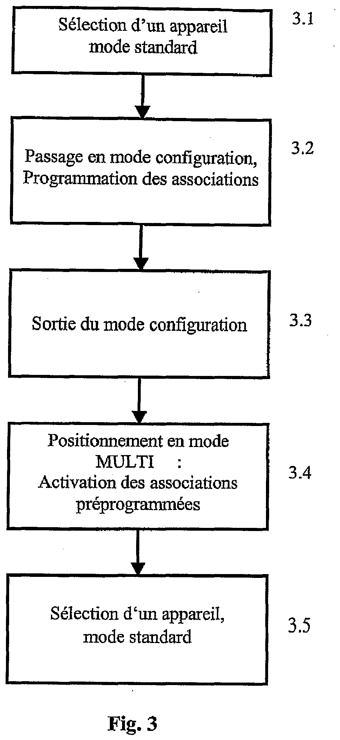

La figure 3 montre un organigramme représentant les principales étapes pour la mise en oeuvre d'un exemple de réalisation de l'invention. Au départ, à l'étape 3.1, le sélecteur 8 est positionné sur n'importe quel appareil ce qui permet à la télécommande 1 de contrôler préférentiellement celui-ci, c'est à dire la majorité des touches contrôle cet appareil, c'est le mode standard. A l'étape 3.2, l'utilisateur appuie sur la touche « CONFIGURATION » ce qui active l'exécution d'un module spécial du programme exécutable contenu dans la mémoire 3. A cours de l'étape 3.2, l'utilisateur programme les associations entre des commandes et des appareils. Au cours de cette étape, la télécommande n'émet pas de signaux infrarouge. Puis à l'étape 3.3, l'utilisateur sort de l'étape de configuration en appuyant une seconde fois sur la touche « CONFIGURATION », la télécommande peut de nouveau contrôler l'appareil déterminé par la position du sélecteur 8, comme à l'étape 3.1. A l'étape 3.4, l'utilisateur positionne le sélecteur 8 en mode « MULTI ». Suite à cette action, la télécommande est dans un mode où toutes les associations programmées lors de l'étape 3.2 sont activées. Puis (à l'étape 3.5), lorsque l'utilisateur désire de nouveau contrôler uniquement un quelconque appareil en disposant de toutes les fonctions disponibles sur la télécommande 1, il change la position active du sélecteur 8 et, le positionne sur cet appareil, la télécommande retrouve le même comportement qu'à l'étape 3.1.

Le passage en mode configuration peut s'effectuer de différentes manières. Celle décrite ci-dessus est un exemple, elle consiste en un bouton qui active le mode lors du premier appui et le désactive lors du second appui. Une variante consiste en ce que la télécommande est en mode configuration tant que le bouton « CONFIGURATION » est enfoncé. L'utilisateur appuie sur une touche de commande, ce qui crée l'association entre cette commande et l'appareil correspondant à la position actuelle du sélecteur 8. De cette manière, un appui intempestif sur le bouton « CONFIGURATIION » ne risque pas de créer par mégarde une nouvelle association. Une autre variante consiste en ce que un appui prolongé (au moins 5 secondes) sur une touche de commande permet une association entre la commande correspondant à la touche enfoncée et l'appareil correspondant à la position actuelle du sélecteur 8. Cette variante évite l'installation d'une touche CONFIGURATION sur la télécommande. D'autres façons de faire sont envisageables qui ne s'écartent pas de l'objet de la présente invention.

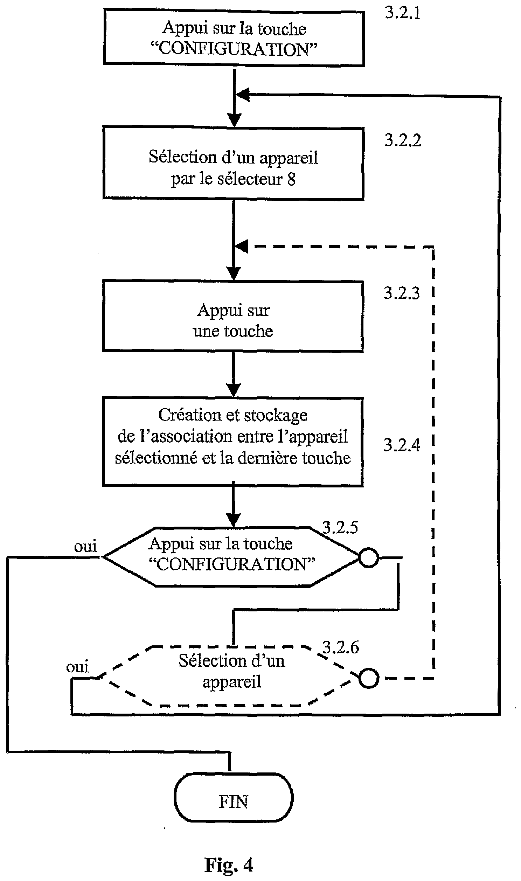

La figure 4 présente un organigramme des opérations à effectuer au cours de l'étape 3.2 de configuration des associations. A l'étape 3.2.1, l'utilisateur appuie sur la touche « CONFIGURATION ». Puis à l'étape 3.2.2, l'utilisateur sélectionne un appareil en positionnant le sélecteur 8. Ensuite, à l'étape 3.2.3, l'utilisateur choisit une commande en pressant la touche correspondante, une touche de fonction « son+ » par exemple. Consécutivement à ces deux opérations, à l'étape 3.2.4, le programme exécutable associe l'appareil sélectionné avec la commande correspondante à la touche enfoncée. Les associations sont enregistrées dans une partie non volatile (de type EEPROM par exemple) de la mémoire 3, sous la forme d'un tableau dit « tableau des associations » dont voici la structure générale :

**TABLEAU 1**

| Commande | Code d'appareil |
|---|---|
| 1A - « SON+ » | 03 |
| 1B - « SON -» | 03 |
| 45 - « PLAY » | 02 |
| 56 - « Arrêt» | 01 |
| 57 - « Marche » | 01 |
| B0 - « Programme - » | 01 |
| B1 - « Programme + » | 01 |

Le code de la commande est avantageusement celui de la touche correspondante. Le tableau 1 réalise l'association des codes en hexadécimal de touches et d'appareils. Selon l'exemple du tableau ci-dessus, le code du récepteur de télévision est « 01 », celui du lecteur DVD est « 02 » et celui de l'amplificateur est « 03 ». Les données du tableau définissent qu'en mode MULTI, les commandes « Arrêt », « Marche », « Programme + » et « Programme - » contrôlent le récepteur de télévision, la commande « PLAY » contrôle le lecteur DVD et les commandes « SON + » et « SON - » l'amplificateur.

Si à l'étape 3.2.5, l'utilisateur appuie une seconde fois sur la touche « CONFIGURATION » la télécommande sort du mode configuration en figeant le tableau 1 des associations. Le tableau des associations ne pourra être modifié qu'en revenant en mode configuration. Si l'utilisateur active le sélecteur 8, soit en appuyant sur un bouton poussoir si le sélecteur est constitué de boutons poussoir, soit en changeant la position du commutateur si le sélecteur est réalisé à partir d'un tel élément, le programme boucle à nouveau à l'étape 3.2.2 et l'utilisateur peut réaliser une autre association. En variante, les étapes 3.2.2 et 3.2.3 peuvent être inversées, l'utilisateur peut ainsi d'abord choisir une touche avant de l'associer à un appareil.

Un premier perfectionnement consiste à émettre les codes de la touche à plusieurs appareils en multiplexant les signaux et en les émettant en salves répétitives. Dans ce cas, le tableau 1 peut contenir plusieurs codes d'appareils pour une même touche. Par exemple, si à la ligne correspondant à la touche « Arrêt» codée 56, les trois appareils (codés 01, 02 et 03) sont associés à cette touche, alors la télécommande peut éteindre les trois appareils ensemble. En variante, le tableau des associations peut présenter un appareil par ligne, et tous les codes des touches associées à cette appareil forment une liste contenu dans la seconde colonne du tableau.

Un perfectionnement, représenté par les éléments en pointillé sur la figure 4 consiste à faire boucler le programme à l'étape 3.2.3 afin d'affecter toutes les commandes à un même appareil sans avoir à le désigner à chaque fois. Le programme teste à l'étape 3.2.6 si l'utilisateur sélectionne une commande en appuyant sur une touche ou s'il sélectionne un appareil à l'aide du sélecteur 8. Dans le premier cas, le programme saute à l'étape 3.2.3 pour effectuer une nouvelle association d'une nouvelle commande avec le même appareil que précédemment. Dans le second cas, le programme saute à l'étape 3.2.2 pour effectuer une nouvelle association d'une nouvelle touche avec un nouvel appareil.

Un autre perfectionnement consiste à interdire certaines associations. Pour interdire de telles associations le tableau 1 est modifié pour contenir une nouvelle colonne :

**TABLEAU 2**

| Code de commande (touche) | Code d'appareil | Code d'appareil interdit |
|---|---|---|
| 1A - « SON+ » | 03 | 02 |
| 1B - « SON -» | 03 | 02 |
| 45 - « PLAY » | 02 | 01,03 |
| 56 - « Arrêt» | 01 | |
| 57 - « Marche » | 01 | |
| B0 - « Programme - » | 01 | 02,03 |
| B1 - « Programme + » | 01 | 02,03 |

La troisième colonne est programmé par le fabricant de la télécommande et n'est pas modifiable. Selon l'exemple donné par les valeurs ci-dessus, si l'utilisateur au cours de l'étape de configuration 3.2 associe la commande « PLAY » à un amplificateur audio, ou au récepteur de télévision, cette association n'étant pas possible, la télécommande émet à l'intention de l'utilisateur une indication visuelle ou sonore indiquant une erreur. Typiquement, la touche « CONFIGURATION » ne peut être associée à un appareil en particulier, toute tentative d'association avec cette touche est vouée à l'échec. L'indication visuelle est typiquement le clignotement en rouge d'un des indicateurs 9. L'association n'est alors pas enregistrée dans la mémoire. Si la télécommande est dotée d'un écran tactile, après la sélection d'un appareil, de façon particulièrement avantageuse, seules apparaissent les icônes ou les représentations graphiques des touches autorisées. Ainsi de façon très simple, l'utilisateur voit tout de suite sur son clavier/écran tactile les associations qui peuvent être programmées. Une variante consiste en ce que l'indication d'une tentative d'association interdite est signalé par un timbre sonore émettant un son bref.

Un autre perfectionnement consiste à définir plusieurs jeux d'associations. On peut ainsi associer un jeu à un utilisateur déterminé, lors de l'étape de configuration, cet utilisateur crée ses propres associations. On peut aussi associer un jeu à un appareil privilégié, par exemple le DVD ou le VCR, selon l'un ou l'autre cas les commandes « PLAY », « STOP », « REV », « FWD », et « PAUSE » sont destinées à contrôler le DVD ou le VCR alors que d'autres touches contrôlent d'autres appareils. On peut aussi associer un jeu à une pièce déterminé d'un domicile, l'étape de configuration d'un tel jeu prend en compte les appareils présents dans la pièce

Pour cela, et d'une façon connue en soi, la télécommande possède un moyen d'introduction d'un code identifiant un jeu, ce moyen est par exemple une touche spéciale que l'utilisateur enfonce, puis il introduit un code qui est généralement un chiffre de 0 à 9 ou un code à plusieurs chiffres utilisant les touches de 0 à 9, pour identifier le jeu. Ce code identifie chaque colonne du tableau des associations. Le tableau des associations prend alors la structure suivante :

**TABLEAU 3**

| Code de commande (touche) | Code d'appareil par jeu | | | |
|---|---|---|---|---|
| | jeu 1 | jeu 2 | jeu 3 | jeu 4 |
| 1A - « SON+ » | 03 | 01 | 01 | 01 |
| 1B - « SON -» | 03 | 01 | 01 | 01 |
| 45 - « PLAY » | 02 | 02 | 02 | 02 |
| 56 - « Arrêt» | 01 | 01,02 | 01,02,03 | 02 |
| 57 - « Marche » | 01 | 01,02 | 01,02,03 | 02 |
| B0 - « Programme - » | 01 | 01 | 01 | 01 |
| B1 - « Programme + » | 01 | 01 | 01 | 01 |

Lors de l'étape de configuration, les associations introduites sont enregistrées dans la colonne correspondant au jeu identifié. Dans l'exemple du tableau 3 décrit ci-dessus, quatre jeux d'associations sont déjà introduits. Lorsqu'un utilisateur place la télécommande en mode MULTI, il introduit ensuite le code d'un jeu après avoir appuyé sur la « touche spéciale », puis la télécommande recherche dans la colonne du jeu correspondant pour extraire les bonnes associations.

Une variante à ce dernier perfectionnement consiste à disposer d'un sélecteur 8 possédant plusieurs positions MULTI, typiquement 3. Ces 3 positions sont associées chacune à un jeu spécifique d'associations. Une autre façon de faire consiste à disposer d'un second sélecteur présentant à l'utilisateur différents numéro. En position MULTI, ce second sélecteur permet de sélectionner un jeu d'associations parmi plusieurs.

Un autre perfectionnement consiste à associer à chaque appareil un des indicateurs visuels 9 de la télécommande. Ces indicateurs sont typiquement des diodes LED que pour des raisons d'économie, la télécommande n'allume que pendant une durée déterminée, 5 secondes par exemple ou seulement la durée de l'appui. La diode LED est placée juste à coté du nom de l'appareil sérigraphié sur la face avant. Lorsqu'un utilisateur place la télécommande en mode MULTI puis enfonce une touche, si une ou plusieurs associations entre cette touche et au moins un appareil a été réalisé lors de l'étape de configuration 3.2, alors le ou les voyants correspondants aux appareils associés à cette touche sont allumés. De cette façon, l'utilisateur qui ne se rappelle pas toujours de ce qu'il a programmé, peut voir immédiatement quel appareil est contrôlé par cette touche. Un exemple préféré de réalisation consiste en ce que le sélecteur 8 est constitué avec autant de boutons poussoirs que d'appareils et d'un commutateur à deux positions. Les boutons poussoirs qui permettent de sélectionner un appareil contiennent un voyant lumineux dans leur corps. Le commutateur permet d'activer ou non le mode MULTI, la position du commutateur permet à l'utilisateur de voir tout de suite s'il est en mode MULTI ou non. Lorsque l'utilisateur bascule le commutateur pour revenir en mode normal, l'appareil sélectionné avant le mode MULTI est de nouveau sélectionné et son voyant est allumé.

Un autre perfectionnement consiste à implémenter une fonction de RESET ou d'effacement d'une association ou d'un jeu d'association. Une première façon de faire consiste à installer une touche « EFFACEMENT ». En mode configuration, l'utilisateur réalise la même association que celle programmée puis appuie sur le bouton « EFFACEMENT », l'association est alors effacée de la mémoire. Une seconde façon de faire consiste à disposer d'un bouton RESET qui efface toute la mémoire contenant le tableau des associations. Une troisième façon de faire, avantageuse si on utilise une télécommande avec un écran tactile, consiste à utiliser un menu qui permet de relire facilement les associations effectuées et de les effacer sélectivement.

Bien que la présente invention ait été décrite en référence aux modes de réalisation particuliers illustrés, celle-ci n'est nullement limitée par ces modes de réalisation, mais ne l'est que par les revendications annexées. On notera que des changements ou des modifications pourront être apportés par l'Homme du métier.

## Revendications

1. Procédé de commande d'au moins un appareil électronique à l'aide d'un dispositif déporté tel qu'une télécommande comportant des moyens de commande et un moyen de sélection d'un appareil parmi une pluralité d'appareils, ledit procédé comprenant
- une étape de programmation (3.2) d'associations entre un moyen de commande et un appareil parmi la pluralité d'appareils,
- une étape d'activation du dispositif dans un premier mode (3.1) où les moyens de commande contrôlent l'appareil sélectionné par le moyen de sélection,
- une étape d'activation du dispositif dans un second mode (3.4) où plusieurs appareils au moins sont contrôlés par les moyens de commande en fonction des associations effectuées lors de l'étape de programmation,
**caractérisé en ce que** :
- le moyen de sélection d'un appareil parmi une pluralité d'appareils permet également d'activer le second mode.

2. Procédé de commande selon la revendication 1, **caractérisé en ce qu'**il comporte une étape de contrôle des associations lors de l'étape de programmation (3.2) interdisant la programmation d'associations interdites.

3. Procédé de commande selon la revendication 2, **caractérisé en ce qu'**une tentative de programmation d'une association interdite déclenche l'émission d'un signal d'alerte.

4. Procédé de commande selon l'un des revendications 1, 2 ou 3, **caractérisé en ce qu'**il comporte une étape d'affichage d'un identifiant visuel d'un appareil, la dite étape étant déclenchée lorsque le dispositif est dans le second mode et que l'utilisateur active un moyen de commande associé à cet appareil.

5. Procédé de commande selon l'une quelconque des revendications 1 à 4, **caractérisé en ce que** l'étape de programmation (3.2) comporte une première étape de sélection d'un appareil et une étape de sélection de plusieurs moyens de commande à la fois, ces moyens de commande étant associés à cet appareil.

6. Procédé de commande selon l'une quelconque des revendications 1 à 4, **caractérisé en ce que** l'étape de programmation comporte une première étape de sélection d'un moyen de commande et une étape de sélection de plusieurs appareils à la fois, ces appareils étant associés à ce moyen de commande.

7. Procédé de commande selon l'une quelconque des revendications précédentes, **caractérisé en ce que** l'étape de programmation (3.2) permet de définir au moins un jeu d'associations, et **en ce qu'**il comporte une étape de sélection d'un jeu d'associations permettant d'activer ce jeu lorsque le dispositif est dans le second mode.

8. Dispositif pour la commande à distance d'une pluralité d'appareils électroniques, comportant des moyens de commande (6) et un moyen de sélection (8) d'un appareil parmi la pluralité, un moyen de programmation (2,3,6,8) d'au moins une association entre au moins un moyen de commande et au moins un appareil parmi la pluralité d'appareils, le dispositif comportant:
- un moyen d'activation (8) du dispositif dans un premier mode (3.1) où les moyens de commande (6) contrôlent l'appareil sélectionné par le moyen de sélection (8),
- un moyen d'activation (2,3,8) du dispositif dans un second mode (3.4) où plusieurs appareils au moins sont contrôlés par les moyens de commande en fonction des associations effectuées par le moyen de programmation (2,3,6,8),
**caractérisé en ce que** :
- le moyen de sélection (8) d'un appareil parmi une pluralité d'appareils permet également d'activer le second mode.

9. Dispositif de commande selon la revendication 8, **caractérisé en ce que** le moyen de programmation (2,3,6,8) comporte un moyen de contrôle des associations (2,3) interdisant la programmation d'associations interdites.

10. Dispositif de commande selon la revendication 9, **caractérisé en ce qu'**il comporte un moyen d'émission d'un signal d'alerte visuel (9) ou sonore lors d'une tentative de programmation d'une association interdite.

11. Dispositif de commande selon l'une des revendications 8, 9 ou 10, **caractérisé en ce qu'**il comporte un moyen d'affichage d'un identifiant de l'appareil (9) ; le dit moyen étant activé lorsqu'un moyen de commande associé à cet appareil est activé.

12. Dispositif de commande selon la revendication 11, **caractérisé en ce que** le moyen d'affichage d'un identifiant d'appareil (9) est intégré au moyen de sélection (8) d'un appareil.

13. Dispositif de commande selon l'une quelconque des revendications 8 à 12, **caractérisé en ce que** le moyen de programmation (2,3,6,8) comporte un moyen de sélection de moyen de commande (6) et un moyen de sélection (8) de plusieurs appareils, de telle sorte que le moyen de commande sélectionné est associé à chacun des appareils.

14. Dispositif de commande selon l'une quelconque des revendications 8 à 12, **caractérisé en ce que** le moyen de programmation (2,3,6,8) comporte un moyen de sélection (8) d'un appareil et un moyen de sélection de plusieurs moyens de commande, de telle sorte que l'appareil sélectionné est associé à chacun des moyens de commande.

15. Dispositif de commande selon l'une quelconque des revendications 9 à 14 sous la dépendance de la revendication 9, **caractérisé en ce que** le dispositif de commande comporte un écran tactile affichant les associations autorisées.

16. Dispositif de commande selon l'une quelconque des revendications précédentes, **caractérisé en ce qu'**il comporte un moyen de sélection d'au moins un jeu d'associations (2,3,6), le moyen de programmation (2,3,6,8) étant adapté pour programmer le jeu d'associations sélectionné par ledit moyen, et **en ce que** le moyen d'activation (8) active uniquement les associations du jeu sélectionné.

17. Dispositif de commande selon l'une quelconque des revendications précédentes, **caractérisé en ce que** le moyen de sélection d'appareil (8) est constitué d'un commutateur comportant autant de positions que d'appareils à contrôler plus une position activant les associations programmées.

18. Dispositif de commande selon la revendication 17 sous la dépendance de la revendication 16, **caractérisé en ce que** le moyen de sélection d'un jeu d'associations comporte un commutateur possédant autant de positions que de jeux, ce moyen de sélection de jeux étant activé lorsque le moyen de sélection d'appareil (8) est dans la position activant les associations.

## Patentansprüche

1. Verfahren zur Steuerung von mindestens einem elektronischen Gerät mit Hilfe einer getrennten Vorrichtung wie beispielsweise einer Fernbedienung, die Steuerungsmittel und ein Mittel zur Auswahl eines Gerätes aus einer Vielzahl von Geräten aufweist, wobei das besagte Verfahren umfasst:
- einen Schritt zur Programmierung (3.2) von Verbindungen zwischen einem Steuerungsmittel und einem Gerät aus der Vielzahl von Geräten,
- einen Schritt zur Aktivierung der Vorrichtung in einem ersten Modus (3.1), in welchem die Steuerungsmittel das Gerät steuern, das durch das Mittel zur Auswahl ausgewählt wurde,
- einen Schritt zur Aktivierung der Vorrichtung in einem zweiten Modus (3.4), in welchem mehrere Geräte mindestens durch die Steuerungsmittel in Abhängigkeit von den Verbindungen, die während des Schrittes zur Programmierung vorgenommen werden, gesteuert werden,
**dadurch gekennzeichnet, dass**:
- das Mittel zur Auswahl eines Gerätes aus einer Vielzahl von Geräten ebenfalls ermöglicht, den zweiten Modus zu aktivieren.

2. Verfahren zur Steuerung nach Anspruch 1, **dadurch gekennzeichnet, dass** es einen Schritt zur Steuerung der Verbindungen während des Schrittes zur Programmierung (3.2) umfasst, mit dem die Programmierung von unzulässigen Verbindungen gesperrt wird.

3. Verfahren zur Steuerung nach Anspruch 2, **dadurch gekennzeichnet, dass** ein Versuch zur Programmierung einer unzulässigen Verbindung die Aussendung eines Alarmsignals auslöst.

4. Verfahren zur Steuerung nach einem der Ansprüche 1, 2 oder 3, **dadurch gekennzeichnet, dass** es einen Schritt zur Anzeige einer visuellen Kennung eines Gerätes umfasst, wobei der besagte Schritt ausgelöst wird, wenn sich die Vorrichtung im zweiten Modus befindet und der Nutzer ein Steuerungsmittel aktiviert, das mit diesem Gerät verbunden ist.

5. Verfahren zur Steuerung nach einem der Ansprüche 1 bis 4, **dadurch gekennzeichnet, dass** der Schritt zur Programmierung (3.2) einen ersten Schritt zur Auswahl eines Gerätes und einen Schritt zur Auswahl von mehreren Steuerungsmitteln gleichzeitig umfasst, wobei diese Steuerungsmittel mit diesem Gerät verbunden sind.

6. Verfahren zur Steuerung nach einem der Ansprüche 1 bis 4, **dadurch gekennzeichnet, dass** der Schritt zur Programmierung einen ersten Schritt zur Auswahl eines Steuerungsmittels und einen Schritt zur Auswahl von mehreren Geräten gleichzeitig umfasst, wobei diese Geräte mit diesem Steuerungsmittel verbunden sind.

7. Verfahren zur Steuerung nach einem der vorstehenden Ansprüche, **dadurch gekennzeichnet, dass** der Schritt zur Programmierung (3.2) ermöglicht, mindestens einen Satz an Verbindungen festzulegen, und dadurch, dass es einen Schritt zur Auswahl eines Satzes an Verbindungen umfasst, der die Aktivierung dieses Satzes ermöglicht, wenn sich die Vorrichtung im zweiten Modus befindet.

8. Vorrichtung für die Fernsteuerung einer Vielzahl von elektronischen Geräten, umfassend Steuerungsmittel (6) und ein Mittel zur Auswahl (8) eines Gerätes aus der Vielzahl, ein Mittel zur Programmierung (2, 3, 6, 8) von mindestens einer Verbindung zwischen mindestens einem Steuerungsmittel und mindestens einem Gerät aus der Vielzahl von Geräten, wobei die Vorrichtung umfasst:
- ein Mittel zur Aktivierung (8) der Vorrichtung in einem ersten Modus (3.1), in welchem die Steuerungsmittel (6) das Gerät steuern, das durch das Mittel zur Auswahl (8) ausgewählt wurde,
- ein Mittel zur Aktivierung (2, 3, 8) der Vorrichtung in einem zweiten Modus (3.4), in welchem mehrere Apparate mindestens durch die Steuerungsmittel in Abhängigkeit der Verbindungen, die durch das Mittel zur Programmierung (2, 3, 6, 8) vorgenommen werden, gesteuert werden,
**dadurch gekennzeichnet, dass**:
- das Mittel zur Auswahl (8) eines Gerätes aus einer Vielzahl von Geräten ebenfalls ermöglicht, den zweiten Modus zu aktivieren.

9. Steuerungsvorrichtung nach Anspruch 8, **dadurch gekennzeichnet, dass** das Mittel zur Programmierung (2, 3, 6, 8) ein Steuerungsmittel der Verbindungen (2, 3) umfasst, mit dem die Programmierung von unzulässigen Verbindungen gesperrt wird.

10. Steuerungsvorrichtung nach Anspruch 9, **dadurch gekennzeichnet, dass** sie ein Mittel zum Aussenden eines visuellen (9) oder akustischen Alarmsignals bei einem Versuch zur Programmierung einer unzulässigen Verbindung umfasst.

11. Steuerungsvorrichtung nach einem der Ansprüche 8, 9 oder 10, **dadurch gekennzeichnet, dass** sie ein Mittel zur Anzeige einer Kennung des Gerätes (9) umfasst, wobei das besagte Mittel aktiviert wird, wenn ein mit diesem Gerät verbundenes Steuerungsmittel aktiviert wird.

12. Steuerungsvorrichtung nach Anspruch 11, **dadurch gekennzeichnet, dass** das Mittel zur Anzeige einer Gerätekennung (9) in das Mittel zur Auswahl (8) eines Gerätes integriert ist.

13. Steuerungsvorrichtung nach einem der Ansprüche 8 bis 12, **dadurch gekennzeichnet, dass** das Mittel zur Programmierung (2, 3, 6, 8) ein Mittel zur Auswahl von einem Steuerungsmittel (6) und ein Mittel zur Auswahl (8) von mehreren Geräten umfasst, dergestalt, dass das ausgewählte Steuerungsmittel mit jedem der Geräte verbunden ist.

14. Steuerungsvorrichtung nach einem der Ansprüche 8 bis 12, **dadurch gekennzeichnet, dass** das Mittel zur Programmierung (2, 3, 6, 8) ein Mittel zur Auswahl (8) eines Gerätes und ein Mittel zur Auswahl von mehreren Steuerungsmitteln umfasst, dergestalt, dass das ausgewählte Gerät mit jedem der Steuerungsmittel verbunden ist.

15. Steuerungsvorrichtung nach einem der Ansprüche 9 bis 14 in Abhängigkeit von Anspruch 9, **dadurch gekennzeichnet, dass** die Steuerungsvorrichtung einen Touchscreen aufweist, der die genehmigten Verbindungen anzeigt.

16. Steuerungsvorrichtung nach einem der vorstehenden Ansprüche, **dadurch gekennzeichnet, dass** sie ein Mittel zur Auswahl von mindestens einem Satz von Verbindungen (2, 3, 6) umfasst, wobei das Mittel zur Programmierung (2, 3, 6, 8) geeignet ist, um den von dem besagten Mittel ausgewählten Satz von Verbindungen zu programmieren, und dadurch, dass das Mittel zur Aktivierung (8) ausschließlich die Verbindungen des ausgewählten Satzes aktiviert.

17. Steuerungsvorrichtung nach einem der vorstehenden Ansprüche, **dadurch gekennzeichnet, dass** das Mittel zur Geräteauswahl (8) aus einem Schalter besteht, der so viele Stellungen umfasst, wie Geräte zu kontrollieren sind, zuzüglich einer Stellung, die die programmierten Verbindungen aktiviert.

18. Steuerungsvorrichtung nach Anspruch 17 in Abhängigkeit von Anspruch 16, **dadurch gekennzeichnet, dass** das Mittel zur Auswahl eines Satzes von Verbindungen einen Schalter aufweist, der so viele Stellungen wie Sätze besitzt, wobei dieses Mittel zur Auswahl von Sätzen aktiviert wird, wenn sich das Mittel zur Geräteauswahl (8) in der Stellung befindet, die die Verbindungen aktiviert.

## Claims

1. Method for controlling at least one electronic appliance using a remote device such as a remote control comprising control means and an appliance selection means among a plurality of appliances, said method comprising
- an association programming step (3.2) between a control means and an appliance among a plurality of appliances,
- a device activation step in a first mode (3.1) where the control means control the selected appliance by the selection means,
- a device activation step in a second mode (3.4) where several appliances at least are controlled by the control means according to associations created during the programming step,
**characterised in that**:
- the appliance selection means among a plurality of appliance also makes it possible to activate the second mode.

2. Control method according to claim 1, **characterised in that** it comprises an association controlling step during the programming step (3.2) unauthorising the programming of unauthorised associations.

3. Control method according to claim 2, **characterised in that** an attempt to programme an unauthorised association triggers the emission of an alarm signal.

4. Control method according to one of claims 1, 2 or 3, **characterised in that** it comprises a display step of a visual identifier of an appliance, said step being triggered when the device is in the second mode and the user activates a control means associated with this appliance.

5. Control method according to any one of claims 1 to 4, **characterised in that** the programming step (3.2) comprises a first selection step of an appliance and a selection step of several control means at the same time, these control means being associated with this appliance.

6. Control method according to any one of claims 1 to 4, **characterised in that** the programming step comprises a first selection step of a control means and a selection step of several appliances at the same time, these appliances being associated with this control means.

7. Control method according to any one of the preceding claims **characterised in that** the programming step (3.2) enables the definition of at least one set of associations, and **in that** it comprises a selection step of a set of associations enabling the activation of this set when the device is in the second mode.

8. Device for the remote control of a plurality of electronic appliances, comprising control means (6) and a selection means (8) of an appliance among the plurality, a programming means (2, 3, 6, 8) of at least one association between at least one control means and at least one appliance among the plurality of appliances, the device comprising:
- an activation means (8) of the device in a first mode (3.1) where the control means (3.1) control the selected appliance by the selection means (8),
- an activation means (2, 3, 8) of the device in a second mode (3.4) where several appliances at least are controlled by the control means according to associations created by the programming means (2, 3, 6, 8),
**characterised in that**:
- the selection means (8) of an appliance among a plurality of appliances also makes it possible to activate the second mode.

9. Control device according to claim 8, **characterised in that** the programming means (2, 3, 6, 8) comprises an association control means (2,3) unauthorising the programming of unauthorised associations.

10. Control device according to claim 9, **characterised in that** it comprises an emission means of a visual (9) or audible alarm signal during an attempt to programme an unauthorised association.

11. Control device according to one of claims 8, 9 or 10, **characterised in that** it comprises an appliance identifier display means (9); said means being activated when a control means associated with this appliance is activated.

12. Control device according to claim 11, **characterised in that** the appliance identifier display means (9) is integrated to the appliance selection means (8).

13. Control device according to any one of claims 8 to 12, **characterised in that** the programming means (2, 3, 6, 8) comprises a selection means of a control means (6) and a selection means (8) of several appliances, such that the selected control means is associated with each appliance.

14. Control device according to any one of claims 8 to 12, **characterised in that** the programming means (2, 3, 6, 8) comprises an appliance selection means (8) and a selection means of several control means, such that the selected appliance is associated with each control means.

15. Control device according to any one of claims 9 to 14 under the dependence of claim 9, **characterised in that** the control device comprises a touchscreen displaying authorised associations.

16. Control device according to any one of the preceding claims, **characterised in that** it comprises a selection means of at least one set of associations (2, 3, 6), the programming means (2, 3, 6, 8) being adapted to programme the set of associations selected by said means, and **in that** the activation means (8) only activates the associations of the selected set.

17. Control device according to any one of the preceding claims, **characterised in that** the appliance selection means (8) is made up of a switch comprising as many positions as there are appliances to control, plus one programmed associations activation position.

18. Control device according to claim 17 under the dependence of claim 16, **characterised in that** the selection means of a set of associations comprises a switch featuring as many positions as there are sets, this set selection means being activated when the appliance selection means (8) is in the association activation position.
